# EUROPÄISCHE PATENTSCHRIFT

(11) **EP 2 145 121 B1**
(45) Veröffentlichungstag und Bekanntmachung des Hinweises auf die Patenterteilung: **19.01.2011**
(21) Anmeldenummer: 08749684.0
(22) Anmeldetag: 24.04.2008
(51) Int. Cl.: F16H 1/28, F16H 55/17

(54) **BAUTEIL MIT INNEN- UND AUSSENVERZAHNUNG**
COMPONENT HAVING INNER AND OUTER GEARING
COMPOSANT COMPORTANT UNE DENTURE INTÉRIEURE ET UNE DENTURE EXTÉRIEURE

(30) Priorität: 05.05.2007 DE 102007021194
(43) Veröffentlichungstag der Anmeldung: 20.01.2010
(73) Patentinhaber: ZF Friedrichshafen AG, 88038 Friedrichshafen (DE)
(72) Erfinder: ILLERHAUS, Dietmar, 88131 Lindau (DE); SKRABS, Alfred, 66271 Sitterswald (DE); HANKER, Gert, 88074 Meckenbeuren (DE)
(86) Internationale Anmeldenummer: PCT/EP2008/054962
(87) Internationale Veröffentlichungsnummer: WO 2008/135396

(56) Entgegenhaltungen:
- EP-A- 0 074 241
- AU-A- 3 749 078
- DE-A1- 2 821 320
- DE-A1- 10 233 335
- DE-A1-102007 018 024

## Beschreibung

Die Erfindung betrifft ein Bauteil mit Innen- und Außenverzahnung nach dem Oberbegriff des Patentanspruches 1.

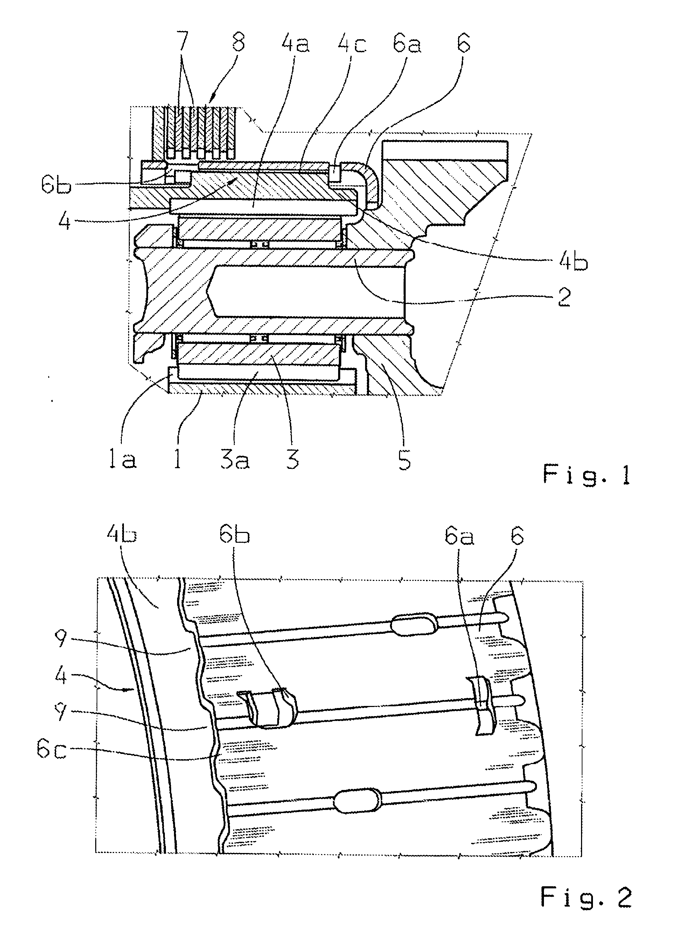

Bauteile mit Innen- und Außenverzahnung sind beispielsweise als Hohlräder von Planetengetrieben in einem Automatgetriebe für Kraftfahrzeuge bekannt. Derartige Hohlräder weisen eine Innenverzahnung auf, in welchen Planetenräder des Planetengetriebes umlaufen. Zusätzlich weisen die bekannten Hohlräder auf ihrem Außenumfang eine Mitnahmeverzahnung auf, in welche Innenlamellen eines Schaltelementes des Automatgetriebes eingreifen. Ein derartiges Hohlrad ist in der älteren Patentanmeldung der Anmelderin mit dem Aktenzeichen 102 006 031 788 in Fig. 1 dargestellt. Dabei ist zur Ölversorgung des Schaltelementes zwischen der Innen- und der Außenverzahnung eine in Längsrichtung oder schräg zur Längsrichtung verlaufende Ölbohrung angeordnet. Da sowohl die Außen- als auch die Innenverzahnung spangebend hergestellt werden, sind die Herstellkosten relativ hoch.

Aus der gattungsbildenden DE 28 21 320 A1 ist ein Planetengetriebe bekannt, welches mehrere Sonnenräder, einen mit einem Gehäuse koppelbaren Planetenträger und ein mit einer Abtriebswelle fest verbundenes Hohlrad umfasst. Durch ein drittes Sonnenrad, welches mit einem dritten Planetenrad kämmt, wird erreicht, dass beim Hochschalten keine Antriebsumschaltung erforderlich ist und dass ein größerer Übersetzungsbereich möglich ist. Das Hohlrad weist hier sowohl eine Innenverzahnung als auch eine Außenverzahnung auf, die jeweils einstückig mit dem Hohlrad gefertigt sind. Durch die Außenverzahnung ist das Hohlrad mit einer entsprechenden Verzahnung der Abtriebswelle verdrehstarr verbunden.

Es ist Aufgabe der vorliegenden Erfindung, ein Bauteil der eingangs genannten Art im Hinblick auf seine Herstellungskosten zu verbessern.

Die Aufgabe der Erfindung wird durch die Merkmale des Patentanspruches 1 gelöst. Erfindungsgemäß ist vorgesehen, dass eine der beiden Verzahnungen, insbesondere die Innenverzahnung, einstückig mit dem Grundkörper des Bauteiles und die andere Verzahnung, insbesondere die Außenverzahnung als Zusatzteil ausgebildet sind, welches mit dem Grundkörper fügbar ist. Durch die erfindungsgemäße zweitteilige Verbundbauweise wird der Vorteil erreicht, dass eine der beiden Verzahnungen, insbesondere die Außenverzahnung nicht spangebend hergestellt werden muss, sondern kostengünstiger als separates Teil produzierbar ist.

Nach einer vorteilhaften Ausführung ist das Zusatzteil als Blechteil ausgebildet, welches durch Umformung, vorzugsweise aus einer Blechplatine herstellbar ist. Damit kann die Außenverzahnung durch ein an sich bekanntes Umformverfahren kostengünstiger hergestellt und auf den Grundkörper des Bauteiles - wie eine Manschette - aufgesteckt werden.

In weiterer vorteilhafter Ausgestaltung ist die Außenverzahnung als Mitnahmeverzahnung für ein Lamellenpaket, insbesondere als Lamellenträger für die Innenlamellen eines Schaltelementes ausgebildet. Derartige meist trapezförmig ausgebildete Mitnahmeprofile können durch Blechumformung günstig hergestellt werden. Darüber hinaus ergeben sich durch die erfindungsgemäße zweitteilige Verbundbauweise Gewichtsvorteile. Die in Längsrichtung verlaufenden Kanäle zwischen dem Mitnahmeprofil und dem Grundkörper können als Schmierölkanäle genutzt werden.

Bevorzugt ist das Bauteil als Hohlrad eines Planetengetriebes ausgebildet, welches über die Außen- bzw. Mitnahmeverzahnung mit einem Schaltelement eines Automatgetriebes zusammen wirkt.

Bevorzugt weist der Grundkörper eine im Wesentlichen zylindrische Außenfläche auf, auf welche das Blechteil mit Mitnahmeprofil aufgeschoben und in axialer Richtung fixiert wird. Dazu weisen der Grundkörper mindestens eine Anschlagfläche und das Blechteil mindestens ein Fixierelement auf. Bevorzugt kann ein erstes Fixierelement bereits im Blechteil vorgefertigt sein, z. B. als eingeschnittene, nach innen gedrückte Nase, welche am Grundkörper stirnseitig zur Anlage kommt.

Bevorzugt kann ein zweites Fixierelement im Blechteil vorgesehen sein, welches nach der Montage, d. h. nach dem Fügen des Blechteiles mit dem Grundkörper derart umgebogen wird, dass es eine axiale Fixierung des Blechteiles gegenüber dem Grundkörper bewirkt.

In vorteilhafter Ausgestaltung können die Fixierelemente durch Stanzprägen hergestellt werden. Somit ergeben sich für das erfindungsgemäße Bauteil Kosten- und Gewichtsvorteile, da nur eine Verzahnung, vorzugsweise die Innenverzahnung spangebend und die andere Verzahnung, vorzugsweise die Außenverzahnung spanlos, d. h. durch Blechumformung herstellbar ist. Der Fügeprozess zur Verbindung des Grundkörpers mit dem Bauteil erfordert keine zusätzlichen Fixierelemente, da diese am Blechteil vorgesehen sind.

Ein Ausführungsbeispiel der Erfindung ist in der Zeichnung dargestellt und wird im Folgenden näher beschrieben. Es zeigen
- Fig. 1: einen Ausschnitt aus einem Automatgetriebe mit einem erfin- dungsgemäßen Hohlrad und
- Fig. 2: eine perspektivische Darstellung des Hohlrades mit einer als Blechumformteil ausgebildeten Mitnahmeverzahnung.

**Fig. 1** zeigt einen Ausschnitt aus einem Automatgetriebe eines Kraftfahrzeuges, wobei Teile einer Planetenstufe, nämlich einen Sonnenrad 1, ein auf einem Planetenbolzen 2 gelagertes Planetenrad 3 sowie ein Hohlrad 4 dargestellt sind. Das Planetenrad 3 weist eine Außenverzahnung 3a auf, welche mit einer Außenverzahnung 1a des Sonnenrades 1 und einer Innenverzahnung 4a des Hohlrades 4 in Eingriff steht. Der Planetenbolzen 2 ist in einem Planetenträger 5 aufgenommen. Das Hohlrad 4 weist einen Grundkörper 4b auf, welcher einstückig mit der Innenverzahnung 4a ausgebildet ist, welche spangebend hergestellt wird. Der Grundkörper 4b weist eine im Wesentliche zylindrische Außenfläche 4c auf, auf welche ein Zusatzteil 6, ausgebildet als Blechformteil, aufgeschoben ist. Das Blechformteil 6 weist eine Mitnahmeverzahnung (vgl. auch Fig. 2) auf, in welche Innenlamellen 7 eines Lamellenpaketes 8 eines nicht vollständig dargestellten Schaltelementes eingreifen. Das Hohlrad 4 steht somit einerseits mit dem Planetenrad 3 und andererseits mit den Innenlamellen 7 in Eingriff, sodass das Hohlrad 4 beispielsweise abgebremst bzw. festgesetzt werden kann. Das Blechformteil 6 weist ein erstes Fixierelement 6a, welches sich an einer stirnseitigen Anschlagfläche des Planetenrades 3 abstützt, und eine zweites Fixierelement 6b, welches an der gegenüberliegenden Stirnseite des Planetenrades 3 anliegt, auf. Das erste Fixierelement 6a ist vorgefertigt, während das zweite Fixierelement 6b erst nach der Montage des Blechformteiles 6 umgebogen wird. Das erste und das zweite Fixierelement 6a, 6b sichern das Blechformteil 6 in beiden axialen Richtungen auf dem Hohlrad 4 bzw. dem Grundkörper 4b. Eine Sicherung des Blechformteiles 6 in Umfangsrichtung kann kraft- oder formschlüssig erfolgen.

**Fig. 2** zeigt das Hohlrad 4 in einer perspektivischen Darstellung mit Blick auf das Blechformteil 6, welches eine als Mitnahmeprofil 6c ausgebildete Außenverzahnung mit etwa trapezförmigem Querschnitt aufweist. Das erste Fixierelement 6a ist als eingeschnittene, nach innen gedrückte Nase ausgebildet, welche bereits vor der Montage des Blechformteiles 6 vorgesehen ist. Das Blechformteil 6 wird in axialer Richtung auf den Grundkörper 4b aufgeschoben, bis die Nase 6a zum Anschlag kommt. Dann wird das zweite Fixierelement 6b, welches als eingeschnittener Lappen ausgebildet ist, nach innen umgebogen und sichert das Blechformteil 6 in der anderen axialen Richtung. Das Blechformteil 6 ist somit als Lamellenträger für die Innenlamellen des Schaltelementes ausgebildet. Zwischen dem Grundkörper 4b, der eine im Wesentlichen zylindrische Umfangsfläche 4c aufweist, werden durch das Mitnahmeprofil 6c Längskanäle 9 gebildet, über welche dem Lamellenpaket 8 Öl zugeführt werden kann.

### Bezugszeichen

- 1: Sonnenrad
- 1a: Außenverzahnung
- 2: Planetenbolzen
- 3: Planetenrad
- 3a: Außenverzahnung
- 4: Hohlrad
- 4a: Innenverzahnung
- 4b: Grundkörper
- 4c: zylindrische Außenfläche
- 5: Planetenträger
- 6: Zusatzteil/Blechformteil
- 6a: 1. Fixierelement/Nase
- 6b: 2. Fixierelement/Lappen
- 6c: Mitnahmeprofil/Außenverzahnung
- 7: Innenlamelle
- 8: Lamellenpaket
- 9: Längskanäle

## Patentansprüche

1. Hohlrad (4) einer Planetenstufe eines Planetengetriebes, wobei das Hohlrad (4) einen Grundkörper (4b) und eine Innenverzahnung (4a) aufweist, und der Grundkörper (4b) und die Innenverzahnung (4a) einstückig ausgebildet sind, **dadurch gekennzeichnet, dass** der Grundkörper (4b) eine im Wesentlichen zylindrische Außenfläche (4c) aufweist und ein Zusatzteil (6) auf der Außenfläche (4c) angeordnet ist, wobei das Zusatzteil (6) eine als Mitnahmeprofil (6c) ausgebildete Außenverzahnung aufweist.

2. Hohlrad (4) nach Anspruch 1, **dadurch gekennzeichnet, dass** das Zusatzteil (6) als durch Umformung herstellbares Blechteil ausgebildet ist.

3. Hohlrad (4) nach Anspruch 1 oder 2, **dadurch gekennzeichnet, dass** die Außenverzahnung (6c) als Mitnahmeverzahnung für ein Lamellenpaket (8) ausgebildet ist.

4. Hohlrad (4) nach Anspruch 2 oder 3, **dadurch gekennzeichnet, dass** der Grundkörper (4b) Anschlagflächen und das Blechteil (6) Fixierelemente (6a, 6b) aufweist, durch welche das Blechteil (6) gegenüber dem Grundkörper (4b) in axialer Richtung gesichert ist.

5. Hohlrad (4) nach Anspruch 4, **dadurch gekennzeichnet, dass** die Anschlagflächen stirnseitig angeordnet sind.

6. Hohlrad (4) nach Anspruch 4 oder 5, **dadurch gekennzeichnet, dass** ein erstes Fixierelement (6a) am Blechteil (6) vorgefertigt ist.

7. Hohlrad (4) nach Anspruch 6, **dadurch gekennzeichnet, dass** das erste Fixierelement (6a) durch Stanzprägen herstellbar ist.

8. Hohlrad (4) nach Anspruch 6 oder 7, **dadurch gekennzeichnet, dass** das erste Fixierelement als durchgestellte Nase (6a) ausgebildet ist.

9. Hohlrad (4) nach einem der Ansprüche 4 bis 8, **dadurch gekennzeichnet, dass** ein zweites Fixierelement (6b) bei oder nach der Montage des Blechteiles (6) fertigbar ist.

10. Hohlrad (4) nach Anspruch 9, **dadurch gekennzeichnet, dass** das zweite Fixierelement (6b) durch Umbiegen von Teilbereichen des Blechteiles (6) fertigbar ist.

## Claims

1. Internal gear (4) of a planet stage of a planetary gear set, with the internal gear (4) having a basic body (4b) and an internal toothing (4a), and with the basic body (4b) and the internal toothing (4a) being formed in one piece, **characterized in that** the basic body (4b) has a substantially cylindrical outer surface (4c) and an additional part (6) is arranged on the outer surface (4c), with the additional part (6) having an external toothing formed as a driving profile (6c).

2. Internal gear (4) according to Claim 1, **characterized in that** the additional part (6) is formed as a sheet-metal part that can be produced by deformation.

3. Internal gear (4) according to Claim 1 or 2, **characterized in that** the external toothing (6c) is formed as a driving toothing for a plate pack (8).

4. Internal gear (4) according to Claim 2 or 3, **characterized in that** the basic body (4b) has stop surfaces and the sheet-metal part (6) has fixing elements (6a, 6b) by means of which the sheet-metal part (6) is secured in the axial direction with respect to the basic body (4b).

5. Internal gear (4) according to Claim 4, **characterized in that** the stop surfaces are arranged on the end sides.

6. Internal gear (4) according to Claim 4 or 5, **characterized in that** a first fixing element (6a) is prefabricated on the sheet-metal part (6).

7. Internal gear (4) according to Claim 6, **characterized in that** the first fixing element (6a) can be produced by punching.

8. Internal gear (4) according to Claim 6 or 7, **characterized in that** the first fixing element is formed as a pushed-through lug (6a).

9. Internal gear (4) according to one of Claims 4 to 8, **characterized in that** a second fixing element (6b) can be produced during or after the mounting of the sheet-metal part (6).

10. Internal gear (4) according to Claim 9, **characterized in that** the second fixing element (6b) can be produced by bending partial regions of the sheet-metal part (6).

## Revendications

1. Couronne (4) d'un étage planétaire d'un engrenage planétaire, la couronne (4) présentant un corps de base (4b) et une denture intérieure (4a), et le corps de base (4b) et la denture intérieure (4a) étant réalisés d'une seule pièce, **caractérisée en ce que** le corps de base (4b) présente une surface extérieure (4c) essentiellement cylindrique et une pièce supplémentaire (6) est disposée sur la surface extérieure (4c), la pièce supplémentaire (6) présentant une denture extérieure réalisée sous forme de profilé d'entraînement (6c).

2. Couronne (4) selon la revendication 1, **caractérisée en ce que** la pièce supplémentaire (6) est réalisée sous forme de pièce en tôle pouvant être fabriquée par façonnage.

3. Couronne (4) selon la revendication 1 ou 2, **caractérisée en ce que** la denture extérieure (6c) est réalisée sous forme de denture d'entraînement pour un paquet de disques (8).

4. Couronne (4) selon la revendication 2 ou 3, **caractérisée en ce que** le corps de base (4b) présente des surfaces de butée et la pièce en tôle (6) présente des éléments de fixation (6a, 6b), qui permettent de fixer la pièce en tôle (6) dans la direction axiale par rapport au corps de base (4b).

5. Couronne (4) selon la revendication 4, **caractérisée en ce que** les surfaces de butée sont disposées du côté frontal.

6. Couronne (4) selon la revendication 4 ou 5, **caractérisée en ce qu'**un premier élément de fixation (6a) est préfabriqué sur la pièce en tôle (6).

7. Couronne (4) selon la revendication 6, **caractérisée en ce que** le premier élément de fixation (6a) peut être fabriqué par gaufrage-estampage.

8. Couronne (4) selon la revendication 6 ou 7, **caractérisée en ce que** le premier élément de fixation est réalisé sous forme de nez rattaché (6a).

9. Couronne (4) selon l'une quelconque des revendications 4 à 8, **caractérisée en ce qu'**un deuxième élément de fixation (6b) peut être fabriqué lors du montage ou après le montage de la pièce en tôle (6).

10. Couronne (4) selon la revendication 9, **caractérisée en ce que** le deuxième élément de fixation (6b) peut être fabriqué par cintrage de régions partielles de la pièce en tôle (6).
